# FASCICULE DE BREVET EUROPEEN

(11) **EP 1 171 475 B1**
(45) Date de publication et mention de la délivrance du brevet: **26.09.2007**
(21) Numéro de dépôt: 00914247.2
(22) Date de dépôt: 24.03.2000
(51) Int. Cl.: C08F 2/06, C08F 2/12

(54) **COMPOSITIONS DE RESINES THERMODURCISSABLES COMPRENANT DES MICROPARTICULES RETICULEES REACTIVES DE TENUE MECANIQUE AMELIOREE**
THERMOHÄRTBARE HARZZUSAMMENSETZUNGEN DIE VERNETZTE REAKTIVE MIKROPARTIKEL MIT VERBESSERTER FESTIGKEIT ENTHALTEN
THERMOSETTING RESIN COMPOSITIONS COMPRISING CROSS-LINKED REACTIVE MICROPARTICLES WITH IMPROVED MECHANICAL STRENGTH

(30) Priorité: 31.03.1999 FR 9904041; 31.03.1999 FR 9904042
(43) Date de publication de la demande: 16.01.2002
(73) Titulaire: CRAY VALLEY SA, 92400 Courbevoie (FR)
(72) Inventeur: PASCAULT, Jean-Pierre, F-69900 Villeurbanne (FR); VALETTE, Ludovic, F-67500 Haguenau (FR); BARBEAU, Philippe, F-60100 Creil (FR); MAGNY, Benoit, F-60550 Verneuil en Halatte (FR)
(74) Mandataire: Killis, Andréas
(86) Numéro de dépôt international: PCT/FR2000/000741
(87) Numéro de publication internationale: WO 2000/059953

(56) Documents cités:
- GB-A- 2 178 048
- CHEMICAL ABSTRACTS, vol. 105, no. 4, 28 juillet 1986 (1986-07-28) Columbus, Ohio, US; abstract no. 25184, "NONAQUEOUS RESIN DISPERSIONS" page 41; colonne 1; XP002123686 & JP 60 226513 A (RICOH CO. LTD.)
- CHEMICAL ABSTRACTS, vol. 95, no. 22, 30 novembre 1981 (1981-11-30) Columbus, Ohio, US; abstract no. 188086, "NONAQUEOUS EMULSIONS OF ACRYLIC POLYMERS" page 32; colonne 1; XP002123687 & JP 08 179111 A (RICOH CO. LTD.)

## Description

La présente invention concerne des compositions thermodurcissables comprenant des microparticules de polymère réticulées (MPR) et réactives, de composition et de fonctionnalité adaptée pour obtenir des performances améliorées de la matrice thermodure finale en termes de tenue mécanique, thermique et chimique. Notamment dans le cas des matrices thermodures de moulages fragiles, la tenue mécanique élevée peut être traduite par une ténacité représentée par une résistance à la fissuration ou une résistance aux chocs nettement améliorées, avec une résistance à la fissuration pouvant être multipliée par trois, en fonction de la nature et du taux de ces microparticules dans ces compositions, tout en maintenant un module mécanique et une température de transition vitreuse, Tg, élevés.

Dans le cas de revêtements thermodurs, la tenue mécanique élevée correspond à un bon compromis dureté / flexibilité, la dureté étant caractérisable par la résistance du revêtement à la pénétration, notamment selon la méthode d'indentation, et la flexibilité par l'aptitude du revêtement sur le substrat à se déformer sans fissuration ou délamination.

Ces compositions thermodurcissables qui peuvent être, par exemple, à base de résines type époxy/amine, polyesters insaturés, vinyl esters ou de mélanges de résines polyesters insaturés/vinyl esters ou de résines hybrides polyesters - polyuréthanes insaturés ont des applications diverses dans les domaines de revêtements de protection, des composites et des pièces moulées de haute tenue thermique, mécanique et chimique.

L'amélioration de la tenue mécanique et plus particulièrement de la ténacité (résistance à la fissuration ou résistance aux chocs) des matériaux fragiles, reste toujours un problème à résoudre en particulier dans le cas des matériaux thermodurs, où entre autres contraintes il ne faut pas affecter ni leur mise en oeuvre ni leurs performances d'application comme leur dureté ou module et tenue thermique ou chimique en particulier aux solvants.

D'après Polymer, 40, 1677-87, 1999 décrivant l'utilisation des thermoplastiques amorphes et d'après Polymer Int. 30, 11-16, 1993, des élastomères liquides peuvent être utilisés dans la matrice thermodure à des concentrations qui, d'après "Toughened Plastics I", ACS - Advances in Chemistry Series, Washington, 233, 1993 et "Rubber Toughened Plastics" ACS - Advances in Chemistry Series, Washington, 222, 1989 ou "Rubber modified thermoset resins" ACS - Adv. In Chemistry Series, Washington 208, 1984, peuvent varier de 2 à 50% en poids par rapport aux composants réactifs. D'après Olabisi et al dans "Polymer-Polymer Miscibility", Academic Press NY 1979, la dureté et les performances thermiques diminuent quand l'agent d'amélioration de la ténacité mécanique est soluble dans la matrice thermodure.

Parmi les méthodes connues, certaines utilisent des agents miscibles dans les composants précurseurs thermodurcissables de départ, qui induisent une séparation de phase lors de la polymérisation comme décrit dans Adv. Polymer Sci., 128, 95-156, 1997 ou Wiley Polymer Networks Group Review Series, 1 (16), 209-217, 1998 ou Polymer, 39 (11) 2269-2280, 1998 ou Polymer Engin. Sci. 26 (1), 54-62, 1986). Suivant le taux d'agent d'amélioration de la ténacité, la morphologie peut être soit des domaines thermoplastiques ou élastomères type CTBN (Carboxy-Terminated Butadiene Nitrile Rubber), dispersés dans la matrice thermodure ou l'inverse, c'est à dire des domaines thermodurs dispersés dans la phase thermoplastique ou élastomère, ou une morphologie bicontinue. En général, la ténacité ou la flexibilité n'est améliorée qu'au détriment d'autres performances essentielles comme la résistance chimique, thermique et le module mécanique ou la dureté, suivant qu'il s'agisse d'une pièce de moulage ou d'un revêtement. Une autre technique d'amélioration de la ténacité consiste à l'incorporation de particules thermoplastiques préformées, en général de l'ordre du micron (selon Chimia, 44, 43-52, 1990) mais le même problème demeure.

D'après J. Applied Polymer Sci. 70, 2313-2322, 1998 ou Polym. Bull., 33. 67-74, 1994, des particules d'élastomères core/shell peuvent aussi être utilisées. En général, elles ne sont pas réactives vis à vis de la matrice type époxy/amine mais des particules core/shell fonctionnalisées peuvent être utilisées d'après J. Appl. Polym. Sci. 69, 2069-78, 1998 ou J. Appl. Polym. Sci. 72, 849-858, 1999.

Le problème essentiel à résoudre avec des particules core/shell est l'obtention d'un mélange homogène avec la composition thermodurcissable hôte type époxy/amine (ou polyester insaturé). En général, des mélangeurs à cisaillement très élevé sont nécessaires avec une procédure de mélange compliquée.

Un deuxième problème rencontré avec les particules core/shell est la viscosité élevée du mélange qui limite sa mise en oeuvre facile et plus particulièrement limite le mouillage des charges et des renforts ou le remplissage correct d'un moule pour les applications type composite, ou limite son utilisation pour l'application sous forme de revêtements de protection en couche mince.

C'est la résolution de ces problèmes que propose la présente invention par l'utilisation de microparticules de polymère réticulées réactives de structure et de fonctionnalité adaptées au milieu hôte, pour améliorer la tenue mécanique, tout en maintenant une tenue thermique et chimique élevée. Ces microparticules, essentiellement à base de monomères acryliques éventuellement en présence d'autres monomères vinyliques comme les vinyl aromatiques, sont en général au moins facilement dispersibles et/ou au moins partiellement solubles ou miscibles dans la composition thermodurcissable hôte, avec une viscosité résultante faible.

Un premier objet de l'invention concerne une composition thermodurcissable, comprenant des microparticules réticulées de taille allant de 10 à 200 nm, avec lesdites microparticules étant au moins partiellement solubles, miscibles et/ou dispersibles dans la composition thermodurcissable de départ et portant au moins une fonction réactive qui peut réagir avec au moins une fonction réactive portée par au moins un des composants réactifs de la composition thermodurcissable, qui est sélectionnée parmi les compositions de type : époxy/amine, époxy/anhydride, isocyanate/amine, isocyanate/alcool, polyesters insaturés, vinyl esters, mélanges polyesters insaturés et vinyl esters, résines hybrides polyesters insaturés/uréthanes, polyuréthanes-urées, résines réactives de Dicyclopentadiène, polyamides réactives.

Plus particulièrement, l'invention porte sur des compositions thermodurcissables comprenant des microparticules portant au moins une deuxième fonction réactive distincte de la première, pouvant réagir avec au moins une autre fonction de même type portée par une autre microparticule et/ou par au moins un composant réactif de la composition thermodurcissable.

L'invention porte aussi sur l'utilisation des compositions de l'invention dans les revêtements et plus particulièment dans les revêtements de protection et encore plus particulièrement dans les revêtements de protection de composants, pièces ou appareils électriques ou électroniques ou pour la fabrication de pièces moulées ou de pièces en matériaux composites.

Un autre objet de l'invention concerne des matrices thermodures obtenues à partir des compositions thermodurcissables de l'invention.

Un dernier objet de l'invention concerne des revêtements de protection ou des pièces de moulage ou des pièces en matériaux composites obtenus à partir des compositions thermodurcissables de l'invention.

Les compositions thermodurcissables comprenant des microparticules de polymère réticulées réactives comme définies dans la présente invention peuvent être à base de toute composition thermodurcissable. La définition thermodurcissable comprend tout système réactif monocomposant ou bicomposant qui peut réticuler par voie de polycondensation et/ou de polymérisation radicalaire et/ou par une voie de polymérisation plus spécifique, en passant d'un état liquide ou pâteux ou poudre solide de structure soluble et/ou fusible à un état solide avec une structure infusible et insoluble. Cette définition comprend entre autres toute composition réticulable par au moins une réaction de polycondensation ou au moins une réaction de polymérisation radicalaire, de préférence accélérée par un effet thermique. Le terme "matrice ou revêtement thermodur" correspond au produit obtenu à partir de la réticulation d'au moins une composition thermodurcissable telle que définie ci-dessus.

Les compositions thermodurcissables selon l'invention sont sélectionnées parmi les systèmes réactifs suivants : époxy/amine, époxy/anhydride, isocyanate/amine, isocyanate/alcool, polyesters insaturés, vinyl esters, mélanges polyesters insaturés et vinyl esters, résines hybrides polyesters insaturés/uréthanes, polyuréthanes-urées, résines réactives de Dicyclopentadiène (DCPD), polyamides réactives. Chaque type de système peut nécessiter une catalyse ou un système spécifique d'amorçage de la polymérisation, qui est bien connu de l'homme du métier. Ces systèmes réactifs thermodurcissables peuvent comporter plusieurs types de composants réactifs qui peuvent réagir entre eux soit directement par réaction de condensation après mélange des composants, soit après mélange et déblocage par chauffage d'une fonction réactive bloquée portée par un des composants (par exemple isocyanate bloqué par phénol réactif par chauffage au dessus de 100°C) soit par polymérisation radicalaire de fonctions éthyléniquement insaturées par simple amorçage thermique ou en présence d'un système d'amorçage radicalaire qui peut comprendre des amorceurs décomposables thermiquement ou sous l'effet d'un rayonnement ou par réaction et/ou catalyse plus spécifique. Comme exemple de réaction plus spécifique d'une insaturation éthylénique, nous pouvons citer l'addition de Michael avec une amine ou un acide ou un thiol. La préparation de ces systèmes réactifs comme systèmes réactifs mono ou bicomposants, comme leur utilisation en tant que compositions thermodurcissables, sont bien connues par l'homme du métier, comme décrit dans "Introduction aux matériaux composites" Edition CNRS, 1983, Tome I. La présence dans ces systèmes d'un diluant réactif de faible poids moléculaire peut être nécessaire pour des questions de mise en oeuvre et/ou de réactivité et/ou de compatibilité.

Les microparticules réticulées réactives présentes dans les compositions thermodurcissables de l'invention sont de taille allant de 10 à 200 nm et portent au moins une fonction réactive, qui réagit avec au moins un composant réactif de la composition thermodurcissable de manière à établir au moins un type de liaison chimique entre une microparticule et la résine thermodurcissable. Plus préférentiellement, ces microparticules portent au moins une deuxième fonction réactive distincte de la première, pouvant réagir avec au moins une autre fonction de même type portée par une autre microparticule et/ou par au moins un composant réactif de la composition thermodurcissable. Ainsi, il est possible d'avoir dans les compositions thermodurcissables hôtes deux types de réactions de réticulation distinctes et superposées avec la possibilité de formation de deux réseaux superposés simultanément ou en deux étapes séparées. Selon un cas particulier de l'invention, les microparticules peuvent porter au moins une fonction réactive par réaction de polycondensation et au moins une deuxième qui est une insaturation α,β éthylénique polymérisable par voie radicalaire ou réactive par réaction plus spécifique citée plus haut. Il faut aussi préciser que les microparticules telles que définies ci-dessus peuvent être présentes sous forme d'un mélange de microparticules ayant les caractéristiques définies ci-dessus et pouvant réagir entre elles et avec les composants réactifs de la composition hôte, avec les microparticules mélangées pouvant être de composition différente et/ou de fonctions réactives différentes.

Les microparticules utilisées pour l'invention sont au moins partiellement solubles ou miscibles et/ou dispersibles dans la composition de résine thermodurcissable de départ. Le terme soluble est à interpréter ici comme signifiant une solution colloïdale macroscopiquement homogène et transparente.

Les méthodes les plus courantes pour la préparation de microparticules réticulées sont d'une part la polymérisation en émulsion en milieu aqueux et d'autre part la polymérisation en dispersion en milieu non aqueux de compositions de composés polymérisables comportant entre autres un composé polymérisable comme agent réticulant. Dans les deux cas, le milieu de polymérisation est non solvant du polymère formé, qui précipite sous forme de particules de polymère. C'est cette deuxième méthode qui est la méthode préférée pour la préparation des microparticules réticulées fonctionnalisées de la présente invention.

De préférence, ces microparticules sont préparées par polymérisation en dispersion en milieu non aqueux non solvant du polymère formé. à partir d'une composition de composés polymérisables éthyléniquement insaturés comprenant :
- au moins un monomère A, comportant une seule insaturation éthylénique polymérisable par voie radicalaire, conférant aux microparticules formées dans ledit milieu non aqueux, une autostabilisation pendant et après polymérisation, sans aucune addition de polymère ayant une fonction d'agent stabilisant, ni avant ni pendant ni après polymérisation
- au moins un composé B comportant au moins deux insaturations éthyléniques polymérisables par voie radicalaire
- au moins un composé C différent de A ou B et comportant au moins une insaturation éthylénique polymérisable par voie radicalaire et au moins une deuxième fonction réactive f1 différente d'une insaturation éthylénique
- et en option, au moins un composé D comportant une seule insaturation éthylénique polymérisable par voie radicalaire différent de A

Les monomères A conférant aux microparticules formées une autostabilisation telle que définie précédemment, peuvent être sélectionnés parmi les monomères n'ayant qu'une seule insaturation éthylénique polymérisable par voie radicalaire, de masse moléculaire M̅n̅ inférieure à 600 et de préférence inférieure à 400, ayant une seule insaturation éthylénique polymérisable sélectionnée parmi les (méth)acrylates, maléates, vinyles et portée par un groupement aliphatique linéaire ou ramifié ou un groupement alicyclique mono ou polycyclique substitué ou non substitué et pouvant éventuellement porter au moins une fonction f2 réactive différente de l'insaturation éthylénique polymérisable. D'une manière générale, la fonction de stabilisation du monomère A est liée à une adéquation du paramètre de solubilité de ce monomère par rapport à celui du milieu de polymérisation et celui du polymère formé. Le terme " (méth)acrylate " est à interpréter partout comme " acrylate et/ou méthacrylate ".

De préférence, les monomères A ont une structure chimique correspondant à la formule générale (I) suivante :

CH₂=CR₁-X-(R₂-Y)ₖ-R (I)

avec
R₁ = H, CH₃
X = ester-(C=O)O-, amide-(C=O) N(R₃)-
Y = ester-O(O=C)-, amide-(R₃)N(C=O)-, uréthane-O(O=C)NH-
R₂ = radical alkylène en C₂-C₆, pouvant être substitué par des groupements fonctionnels tels que OH, comme par exemple un radical résultant de l'ouverture du cycle époxy d'un glycidyle éther
R₃ = alkyle en C₁-C₆, H
k = 0 ou 1
R = radical alkyle ou alkényle linéaires ou ramifiés en C₈-C₂₂ , ou aralkyles substitués sur le cycle aromatique en C₈-C₂₂, ou radical mono ou polycyclique substitué ou non-substitué en C₆-C₂₂, pouvant comporter une fonction réactive f2 sélectionnée parmi : acide ou anhydride carboxylique, hydroxy, époxy, isocyanate bloqué ou non, silane.

Les monomères A préférés de la formule (I) correspondent à R choisi parmi : l'isobornyle, le lauryle, l'octadécyle, l'isodécyle, le tridécyle, le docosanyle, le dicyclopentadiènyle, le cyclohexyle ou un groupement alkyle ou cycloaliphatique en C₈-C₂₂ portant une fonction réactive f2 acide ou anhydride carboxylique, hydroxy ou époxy, isocyanate bloqué ou non, silane. Comme exemple de monomères A portant une fonction f2 acide carboxylique, nous pouvons citer les dérivés mono(méth)acrylés d'anhydride succinique substitué par un alkyle ou alkényle linéaire ou ramifié en C₆-C₂₂, de préférence en C₆-C₁₈, obtenus par réaction de l'anhydride alkyl- ou alkényl- substitué avec un (méth)acrylate d'hydroxy alkyle avec un groupement hydroxy alkyle en C₂-C₆ et de préférence en C₂ ou C₃. Comme exemple de monomère A portant une fonction f2 hydroxy, nous pouvons citer les dérivés mono(méth)acrylés d'acide hydroxystéarique, obtenus par réaction de l'acide hydroxystéarique avec le méthacrylate de glycidyle ou (méth)acrylate de Cardura E10. Une fonction f2 époxy peut être introduite par exemple avec le (méth)acrylate de dicyclopentadiène époxydé, (méth)acrylate de vinyl norbornène époxydé ou (méth)acrylates comportant un époxy cycloaliphatique tel que décrit dans WO 98/28286, ou un (méth)acrylate d'acide gras insaturé époxydé. Une fonction f2 peut être introduite avec un mono(méth)acrylate dérivé de la réaction entre un diisocyanate cycloaliphatique ou aliphatique en C₆-C₁₂ avec un (méth)acrylate d'hydroxy alkyle avec un alkyle en C₂-C₆.

Le taux molaire des monomères A dans les microparticules finales obtenues peut varier de 5% à 99% d'une part suivant la nature du monomère A, et d'autre part, suivant le rôle rempli soit comme simple monomère de stabilisation d'une composition variable à base de composés A, B, C, et éventuellement D, soit comme à la fois monomère de stabilisation et composant de base prédominant des microparticules visées. Par conséquent, le pourcentage molaire ne sera limité que par les performances souhaitées des microparticules à obtenir. D'une manière générale, l'effet autostabilisant est suffisant dans une plage allant de 5% à 80% en moles et en fonction du monomère A choisi. Par la définition de leur fonction technique, les monomères A ont la spécificité de se fixer préférentiellement sur la couche extérieure des microparticules et plus spécifiquement à la surface de celles-ci. Ce point est important en particulier dans le cas où le monomère A porte une fonction réactive f2 telle que définie précédemment. En effet, dans ce cas, la spécificité du monomère A lui permet de fixer la fonction réactive f2 spécifiquement à la surface de la microparticule améliorant ainsi encore plus significativement son accessibilité et sa réactivité globale par rapport aux mêmes fonctions apportées par les composés C porteurs de fonctions f1, lesquelles fonctions f1 se trouvent réparties statistiquement dans tout le volume de la microparticule, avec une accessibilité des fonctions relativement moins facile au coeur de la microparticule qu'en surface. Si plus d'un monomère A portant des fonctions f2 est utilisé, les fonctions f2 différentes ne doivent pas réagir ni entre elles ni avec les fonctions f1 des composés C, au cours de la polymérisation.

Les composés B comportent au moins deux insaturations éthyléniques et servent d'agent de réticulation des microparticules formées. B est un composant essentiel de la composition des composés polymérisables. Ce sont essentiellement des monomères et/ou oligomères éthyléniquement multifonctionnels avec une fonctionnalité en insaturations polymérisables par voie radicalaire d'au moins 2. Dans le cas des monomères, la fonctionnalité, telle que définie précédemment, peut varier de préférence de 2 à 6. Comme exemple de tels monomères, nous pouvons citer : les di(méth)acrylates d'éthylène glycol, de propylène glycol, de butane diol, de méthyl-2 propane diol, de néopentyl glycol, d'hexane diol, de zinc et/ou de calcium ou les divinyl benzènes substitués ou non substitués, les tri(méth)acrylates de glycérol, de triméthylol propane et/ou des dérivés alkoxylés, les tri- ou tétra(méth)acrylates de pentaérythritol et les penta- ou hexa(méth)acrylates de dipentaérythritol. Les oligomères multifonctionnels ont une fonctionnalité qui peut aller de 2 à 50 et de préférence de 2 à 20 et une masse moléculaire M̅n̅ inférieure à 2500, de préférence inférieure à 1500. La fonctionnalité et M̅n̅ sont fixés en fonction de la densité de réticulation désirée. Plus M̅n̅ est faible et plus la fonctionnalité est élevée et plus la densité de réticulation des microparticules sera élevée. Comme exemple de tels oligomères, nous pouvons citer les esters (méth)acryliques d'oligomères polyols à base de polyéthers, comportant des motifs éthers choisis parmi l'oxyéthylène et/ou oxypropylène et/ou oxytétraméthylène, ou à base de polyesters saturés, ou à base de polyuréthanes ou les polyesters insaturés, ou les oligomères acryliques (méth)acrylés qui peuvent être obtenus par exemple soit par (méth)acrylation de copolymères (méth)acryliques à base de méthacrylate de glycidyle par l'acide (méth)acrylique soit par (méth)acrylation de copolymères (méth)acryliques à base d'acide (méth)acrylique par le méthacrylate de glycidyle.

Le taux molaire du composé B peut varier de 0,02% à 30% et de préférence entre 0.5% à 15%. La limitation de ce taux est importante car au-delà d'un taux limite la probabilité de liaison chimique entre microparticules devient importante, avec comme conséquence un risque important de destabilisation, agglomération et sédimentation des microparticules.

Les composés D sont des monomères différents des monomères A tels que définis précédemment et/ou des oligomères comportant une seule insaturation éthylénique polymérisable par voie radicalaire, et sont des composants d'ajustement de la composition de base en fonction des propriétés visées des microparticules qui peuvent varier et s'adapter suivant chaque application particulière. Ils sont sélectionnés de préférence parmi les monomères (méth)acryliques tels que les (méth)acrylates de méthyle, d'éthyle, de propyle, de butyle ou de tertiobutyle ou de éthyl-2 hexyle ou 2-(2-éthoxy)éthoxy éthyle, ou les monomères vinyl aromatiques tels que le styrène ou les vinyl toluènes ou les esters vinyliques tel que l'acétate de vinyle ou les oligomères (méth)acrylés de M̅n̅ inférieure à 2500 et plus particulièrement inférieure à 1500 tels que les (méth)acrylates d'oligomères monohydroxylés. Les (méth)acrylates d'oligomères préférés sont les (méth)acrylates de monoalcools polyalkoxylés, comportant des unités alkoxy choisies parmi l'oxyéthylène et/ou l'oxypropylène et/ou l'oxytétraméthylène, ou les (méth)acrylates dérivés de monoalcools à base de polycaprolactone, ou de polyesters ou de polyuréthanes. La présence de ces composés est optionnelle en fonction de la structure et des performances recherchées des microparticules à obtenir. Ce type de monomères ou oligomères peut ajuster les performances mécaniques des microparticules en termes de dureté ou de flexibilité du coeur de la particule en fonction des températures correspondantes de transition vitreuse Tg. Par exemple, l'utilisation d'un monomère donnant un polymère à Tg faible tel que l'acrylate de butyle permet d'obtenir, en fonction des proportions ajustées, des microparticules à caractère prédominant mou de relativement faible Tg. Ce type de structure est particulièrement intéressant dans la flexibilisation d'une matrice dure ou dans la recherche d'un compromis dureté/flexibilité pour des applications dans les revêtements ou les compositions de moulage, en particulier thermodurcissables qui est l'objet de la présente invention. Leur taux molaire peut varier de 0 à 80% en fonction de la structure souhaitée de la microparticule finale.

Les composés C sont des monomères, différents de A et/ou oligomères, différents de B ou D, portant au moins une insaturation éthylénique, polymérisable par voie radicalaire et au moins une deuxième fonction réactive f1 différente de l'insaturation éthylénique. Ces monomères ou oligomères fonctionnalisés portent des fonctions réactives f1 sélectionnées parmi : acide ou anhydride carboxylique, hydroxy, époxy, isocyanate bloqué ou non, silane, amine ou oxazoline. Sans limitation, les exemples suivants de composés C possibles peuvent être cités :
- dans le cas où la fonction f1 est un acide carboxylique : les acides (méth)acrylique, maléique, fumarique ou itaconique
- dans le cas où f1 est une fonction anhydride : les anhydrides maléique ou itaconique
- dans le cas où f1 est un hydroxy : les (méth)acrylates d'hydroxy alkyles avec un hydroxy alkyle en C₂-C₄ tels que l'hydroxy éthyle, polycaprolactone ou de diols tels que : polyéthers diols comportant des unités éthers choisies parmi l'oxyéthylène et/ou oxypropylène et/ou oxytétraméthylène, polyesters diols ou polyuréthanes diols, de M̅n̅ inférieure à 2500 et de préférence inférieure à 1500
- dans le cas où f1 est une fonction époxy : le méthacrylate de glycidyle ou un (méth)acrylate de glycidyle alkoxylé tel que décrit dans WO 98/28287
- dans le cas où la fonction f1 est un isocyanate : le (méth)acrylate d'isocyanatoéthyle ou le mono(méth)acrylate d'un uréthane isocyanate dérivé de la condensation d'un (méth)acrylate d'hydroxy alkyle en C₂-C₆ avec un diisocyanate aromatique tel que le Diisocyanato-Toluene (TDI).
- dans le cas où f1 est une fonction silane celle-ci peut être utilisée sous forme de trialkyl- ou trialkoxy- silane portée par un dérivé monomère ou oligomère (méth)acrylique.
- dans le cas où f1 est une fonction amine : le tertio butyl amino éthylméthacrylate ou le diméthyl amino éthyl méthacrylate
- dans le cas où f1 est une fonction oxazoline : (méth)acrylates d'oxazoline et plus particulièrement le 2-(5-méthacryloyl-pentyl)-1,3 oxazoline

D'une manière générale, les fonctions f1 portées par au moins un composé C peuvent être différentes mais elles ne doivent pas réagir entre elles ou avec d'éventuelles fonctions f2 portées par des monomères A, au cours de la polymérisation.

Le choix du composé C, de sa fonction réactive et de son taux molaire dépendra essentiellement du système réactif d'application et de la composition et fonctionnalité de ce dernier. Le taux molaire peut ainsi varier jusqu'à 80% pour des microparticules fortement réactives.

Il est évident pour l'homme du métier que ces fonctions ne doivent pas interagir avec le milieu de polymérisation afin que ces fonctions réactives soient préservées. Un moyen de préserver les fonctions f1 susceptibles d'interagir avec le milieu de polymérisation est le blocage de la fonction f1 par un agent bloquant avec déblocage possible de f1 après polymérisation dans le même contexte qu'une modification chimique des fonctions f1 après l'étape de polymérisation. Un tel blocage préventif et déblocage postérieur est bien connu par l'homme du métier.

Les fonctions f1 portées initialement par le composé C et/ou les fonctions f2 éventuellement portées par le monomère A peuvent être modifiées après polymérisation en fonctions respectives f3 et f4 par réaction chimique en une ou plusieurs étapes avec les réactifs appropriés. Par exemple, l'introduction d'une fonction finale f4 (méth)acrylate pourra se faire soit à partir d'une fonction f1 époxy par réaction avec l'acide (méth)acrylique, soit à partir de f1 acide carboxylique par réaction avec le (méth)acrylate de glycidyle ou le (méth)acrylate d'hydroxy éthyle. Ces dernières réactions peuvent aussi être utilisées pour introduire spécifiquement à la surface de la microparticule des fonctions f3 (méth)acryliques à partir de fonctions précurseurs f2 , comme déjà décrit pour les fonctions précurseurs f1.

Les microparticules de l'invention peuvent aussi être obtenues, sans limitation du procédé utilisé, par polymérisation d'une composition de composés polymérisables éthyléniquement insaturés, composée de :
- un premier composant A' représentant de 50 à 99% en moles de ladite composition de polymérisables et constitué de (méth)acrylate de : isobornyle et/ou norbornyle et/ou cyclohexyle et/ou lauryle et/ou tridécyle et/ou octadécyle et/ou de Cardura E10, optionnellement en combinaison avec un (méth)acrylate d'alkyle en C₂-C₈
- un deuxième composant B' constitué d'au moins un monomère ou oligomère comportant au moins deux insaturations éthyléniques polymérisables par voie radicalaire
- un troisième composant C' constitué d'au moins un monomère ou oligomère comportant en plus d'une insaturation éthylénique polymérisable par voie radicalaire au moins une deuxième fonction réactive f1' différente de l'insaturation éthylénique,
avec la possibilité de modification chimique au moins partielle des fonctions initiales f1' en fonctions finales f2' sous condition que les fonctions f1' sélectionnées ne réagissent pas entre elles lors de la polymérisation, et que la somme de trois composants polymérisables A'+B'+C' soit égale à 100% en moles. Plus préférentiellement, ces microparticules portent des fonctions f1', apportées par le troisième composant C', sélectionnées parmi: époxy, hydroxy, carboxy, anhydride carboxylique, isocyanate, silane, amine, oxazoline et le cas échéant des fonctions f1' au moins partiellement modifiées en fonctions f2' sélectionnées parmi : (méth)acrylates, vinyles, maléates, maléimides. itaconates, esters d'alcools allyliques, insaturations à base de dicyclopentadiène, esters ou amides gras insaturés en C₁₂-C₂₂, sels d'acide carboxylique ou sels d'ammonium quaternaire. Ces microparticules sont obtenues de préférence par polymérisation de la composition des polymérisables A', B', C', en dispersion en milieu non aqueux non solvant du polymère et en l'absence de tout polymère stabilisant additionné au départ ou pendant ou après polymérisation, suivant le procédé décrit plus haut. Le composant B' peut être constitué de composés tels que décrits pour le composé B et de même le composant C' peut être constitué de composés tels que déjà décrits plus haut pour le composé C.

Aussi bien la composition que la fonctionnalité des microparticules utilisées dans les compositions thermodurcissables de la présente invention sont adaptables en fonction de la composition thermodurcissable hôte de départ. Par exemple, la composition et la fonctionnalité sont adaptées pour avoir une bonne compatibilité et/ou au moins une dispersion homogène des microparticules réactives dans la composition hôte de départ. D'autre part, au moins une partie des fonctions réactives portées par ces microparticules sont identiques et/ou réagissent avec celles portées par les composants réactifs thermodurcissables. Plus particulièrement, la structure des microparticules est adaptée à l'effet recherché en termes de compromis dureté/flexibilité. Dans le cas de compositions précurseurs de matrices thermodures de dureté ou de module et/ou de Tg élevés et de flexibilité insuffisante, à améliorer soit en termes de coefficient K_{1c} et/ou de résistance aux chocs, les microparticules préférées auront des températures de transition vitreuse Tg généralement inférieure à 60°C et de préférence de Tg inférieure à 30°C et plus préférentiellement entre -50 et 20°C.

D'une manière générale, le taux des microparticules réactives dépend de l'amélioration recherchée, de la matrice thermodure hôte à renforcer et/ou flexibiliser et les fonctions réactives portées. Ce taux peut se situer entre 0,5 et 50% en poids de la matrice thermodure organique globale (de composants réactifs organiques thermodurcissables + microparticules) et préférentiellement de 2 à 35% et encore plus préférentiellement de 5 à 25% en poids de la matrice thermodure organique globale.

Un cas particulier de matrices thermodures nécessitant une amélioration du compromis dureté / flexibilité est le cas de matrices thermodures type époxy/amine. Dans ce contexte particulier, les compositions thermodurcissables de type époxy/amine proposées par l'invention comprennent :
a) au moins un composé époxydé ayant une fonctionnalité en groupements époxy d'au moins deux, de structure aromatique et/ou (cyclo)aliphatique
b) au moins un composé amine de fonctionnalité en amine d'au moins deux, de structure aromatique et/ou (cyclo)aliphatique
c) le cas échéant un composé époxyde monofonctionnel portant une deuxième fonction distincte et polymérisable par voie radicalaire

Ces compositions comprennent en plus des composants a), b) et le cas échéant c) ci-dessus mentionnés :
d) 0,5-50% en poids par rapport à a)+b)+c)+d) de microparticules réticulées réactives

Les microparticules réticulées réactives préférées pour les compositions à base d'époxy/amine portent au moins une fonction époxy ou acide ou anhydride carboxylique. Ces microparticules sont obtenables par polymérisation à partir d'une composition de :
i) 10-50% en moles de (mêth)acrylate de : lauryle et/ou tridécyle et/ou d'octadécyle et/ou de docosyle et/ou d'isobornyle et/ou de Cardura E 10
ii) 10-70% en moles de (méth)acrylate de butyle ou de tertiobutyle ou de éthyl-2 hexyle ou de 2-(2-éthoxy) éthoxy éthyle
iii) 5-30% en moles de :
   - méthacrylate de glycidyle et/ou d'au moins un (méth)acrylate portant au moins une fonction époxyde dérivé de dicyclopentadiène ou de vinyl norbornène ou de cyclohexène et/ou de (méth)acrylates alkoxylés de glycidyle éther, pour une fonction époxy
   - d'acide (méth)acrylique et/ou d'acide maléique ou fumarique ou itaconique et/ou d'anhydride maléique, pour une fonction acide ou anhydride carboxylique
iv) 2-10% en moles de di(méth)acrylate de : hexane diol et/ou néopentyl glycol et/ou triméthylol propane
avec les proportions des composants sélectionnées de telle manière pour que la somme des pourcentages molaires de i)+ii)+iii)+iv) soit égale à 100, et
avec la possibilité supplémentaire lors d'une seconde étape de modifier au moins partiellement les fonctions réactives de départ décrites ci-dessus, en une deuxième fonction réactive suivant :
- les fonctions époxy : par réaction avec l'acide (méth)acrylique
- les fonctions acides (carboxy) et/ou anhydride : par réaction avec le méthacrylate de glycidyle ou l'alcool vinylique ou allylique, ou un (méth)acrylate d'hydroxy alkyle

La modification partielle de ces microparticules peut conduire ainsi à des compositions thermodurcissables type époxy/amine comprenant des microparticules telles que décrites ci-dessus avec au moins deux fonctions réactives distinctes telles que :
- époxy en présence de : (méth)acrylate
- acide et/ou anhydride carboxylique en présence de : (méth)acrylate ou allyle ou vinyle

Plus particulièrement sont préférées les compositions époxy/amine telles que décrites ci-dessus comprenant des microparticules réticulées réactives portant au moins une fonction d'insaturation éthylénique polymérisable par voie radicalaire et au moins une autre fonction qui de préférence réagit avec les fonctions époxy des composants réactifs thermodurcissables. Plus spécifiquement, sont préférées les compositions type époxy/amine comprenant des microparticules réticulées réactives avec comme époxy des composants réactifs thermodurcissables. Plus spécifiquement, sont préférées les compositions type époxy/amine comprenant des microparticules réticulées réactives avec comme fonctions : carboxy ou anhydride en présence de (méth)acrylate et/ou allyle et/ ou vinyle.

Pour réaliser ces compositions époxy/amine, les composés époxydés de fonctionnalité d'au moins deux en époxy sont sélectionnés parmi les monomères époxydés multifonctionnels, mais aussi parmi les résines époxydées constituées d'oligomères / polymères de M̅w̅ allant jusqu'à 20000. Comme exemples de composés époxydés de structure aromatique, on peut citer les dérivés du diglycidyle éther du Bis Phénol A (DGEBA) et F (DGEBF) qui peuvent être alkoxylés, de préférence propoxylés et/ou éthoxylés, avec un nombre d'unités alkoxy entre 1 et 10, ou aliphatiques tels que le diglycidyl éther du butane diol ou du propylène glycol ou les résines type novolaques époxydées.

Parmi les composés époxydés cycloaliphatiques préférés, il y a les monomères époxydés multifonctionnels à base de dérivés du cyclohexène époxydé tels que décrits dans WO 98/45349 et/ou des oligomères et/ou des polymères obtenus à partir de (méth)acrylates époxydés tels que décrits dans WO 98/28286 ou WO 98/28287.

En ce qui concerne les composés époxydes monofonctionnels, ils sont présents de préférence comme diluant réactif régulateur de la viscosité et plus préférentiellement en présence d'oligomères et/ou polymères époxydés. Ils portent une deuxième fonction réactive par polymérisation radicalaire, telle que méthacrylate. Exemples préférés : MAGLY, ou (méth)acrylates époxydes à base de dicyclopentadiène époxydé ou de cyclohexène époxydé ou de vinyl norbornène époxydé. Dans un cas plus spécifique, les microparticules réactives de la 4,4' méthylène bis (3-chloro-2,6-diéthylamine), dicyano-diamide, 4,4' diaminodiphénylsulfone, 4,4' diamino-3.3' diméthyl-dicyclohexyl méthane, diéthyl toluène diamine, m-méthyl xylène diamine, (poly)propylène diamine ou triamine ou Jeffamines^{®}, triéthylènetétramine.

Dans le cas de compositions thermodurcissables à base de polyesters insaturés ou de polyesters insaturés modifiés par des polyisocyanates, ou de vinyl esters ou de leurs mélanges les microparticules réactives peuvent porter comme fonctions réactives préférées les suivantes :
- maléate acide seul et/ou (méth)acrylate avec éventuellement des fonctions hydroxyles résiduelles, en particulier dans le cas de polyesters modifiés par des polyisocyanates, par modification éventuellement partielle de fonctions de départ hydroxyles respectivement par l'anhydride maléique et/ou l'acide (méth)acrylique
- anhydride et acide carboxylique seul et/ou (méth)acrylate par modification éventuellement partielle de fonctions anhydride ou acide de départ par un (méth)acrylate d'hydroxyle ou le méthacrylate de glycidyle

Selon un autre cas particulier de l'invention, la composition thermodurcissable est à base de polyesters insaturés et/ou de polyesters insaturés modifiés par des polyisocyanates et/ou de vinyl esters. Dans ce cas, elle peut comprendre :
- au moins un polyester insaturé et/ou au moins un polyester insaturé modifié par un polyisocyanate et/ou au moins un vinyl ester
- au moins un comonomère copolymérisable portant au moins une insaturation α,β éthylénique choisi parmi les monomères vinyl aromatiques et/ou (méth)acryliques et/ou allyliques
- éventuellement au moins un deuxième monomère portant au moins deux fonctions réactives dont une polymérisable par voie radicalaire et l'autre par réaction de condensation
- 0,5-50% et de préférence de 5 à 20% en poids de microparticules réticulées réactives, qui peuvent être obtenues par polymérisation à partir de :
   - 10-40% en moles de (méth)acrylate de Cardura E10
   - 10-75% en moles de (méth)acrylate de butyle et/ou de tertiobutyle et/ou de éthyl-2 hexyle et/ou de 2-(2-éthoxy) éthoxy éthyle et de styrène, avec un rapport molaire styrène sur monomères (méth)acryliques pouvant varier de 0 à 0,2
   - 5-40% en moles de (méth)acrylate d'hydroxyéthyle, ou d'anhydride maléique ou d'acide (méth)acrylique ou de méthacrylate de glycidyle
   - 2-10% en moles de (méth)acrylate de : hexane diol et/ou de propylène glycol et/ou de néopentyl glycol et/ou de triméthylol propane,
   avec la somme des pourcentages molaires de ces constituants étant égale à 100.

Ces compositions comprennent aussi un système d'amorçage radicalaire que l'homme du métier sait adapter suivant les conditions d'application.

Les fonctions réactives de départ de ces microparticules sont de préférence au moins partiellement modifiées :
- les fonctions de départ hydroxyles en maléates acides par réaction avec l'anhydride maléique et/ou en (méth)acrylates par réaction avec l'acide (méth)acrylique
- les fonctions de départ époxy en (méth)acrylates, par réaction avec l'acide (méth)acrylique
- les fonctions acide carboxylique en méthacrylate par réaction avec le méthacrylate de glycidyle
- les fonctions anhydride en (méth)acrylates et acides résiduels par réaction avec un (méth)acrylate d'hydroxyéthyle ou d'hydroxypropyle

Les polyesters insaturés utilisables pour les compositions précitées peuvent être sélectionnés parmi les polyesters insaturés obtenus par polycondensation :
- d'un anhydride ou diacide insaturé, tel que l'anhydride maléique et ses dérivés de condensation avec le dicyclopentadiène (DCPD), l'acide maléique et/ou fumarique éventuellement en présence d'au moins un anhydride ou diacide saturé, tels que l'anhydride ou diacide o-, iso-, ou téré-phtalique ou tétra- bromo-téréphtalique ou adipique, avec
- un polyol tel que l'éthylène glycol, propylène glycol, diéthylène glycol, néopentyl glycol, dipropylène glycol, méthyl-2 propane diol, butane diol, bisphénol hydrogéné et dérivés, triméthylol propane, triméthyl pentane diol
avec une fonctionnalité hydroxy et/ou carboxy et des indices correspondant I_{OH} de 50 à 250 et I_{CO2H} de 50 à 250, éventuellement modifiées par le DCPD ou par un polyisocyanate de fonctionnalité d'au moins deux, aromatique tel que le méthylène di(phényl isocyanate), ou cycloaliphatique tel que l'isophorone diisocyanate. La composition de polyester insaturé utilisable peut être aussi une comprenant au moins un polyesterether insaturé, telle que décrite dans EP 930327. La composition de polyesters insaturés modifiés ou non, peut comprendre de 20 à 50% et de préférence de 25 à 40% en poids d'au moins un comonomère comme diluant réactif qui peut être sélectionné parmi : styrène, α-méthyl styrène, o-, m- p-vinyl toluène, divinyl benzènes, diallyl phtalate, ou un monomère acrylique multifonctionnel. Dans le cas de polyesters insaturés portant des fonctions carboxy ou de polyesters modifiés par un polyisocyanate, le comonomère peut comprendre un des monomères (méth)acryliques époxydés dérivés de l'époxydation d'un (méth)acrylate d'allyle alkoxylé décrite dans WO 98/28287 ou du (méth)acrylate de dicyclopentadiène ou de vinyl norbornène. Le système amorceur de réticulation radicalaire peut être à base d'un peroxyde tel que le peroxyde de méthyl éthyl cétone ou le peroxyde de benzoyle, dans des conditions connues par l'homme du métier.

Dans le cas de compositions à base de, ou comprenant des résines vinyl esters, celles-ci peuvent être des résines connues par l'homme du métier, telles que les (méth)acrylates : de glycidyle éther de Bisphénol A et de ses dérivés alkoxylés ou de résines novolaques époxydées. Les mêmes comonomères que pour les polyesters insaturés peuvent servir de diluant réactif. Le même système d'amorçage de la réticulation radicalaire que pour les polyesters insaturés peut être utilisé. La présence de fonctions résiduelles hydroxy (résultant de l'ouverture de l'époxy) ou époxy partiellement estérifiés peut permettre une double réaction de réticulation avec des microparticules réticulées réactives portant des insaturations polymérisables telles que maléate et/ou (méth)acrylate et une deuxième fonction telle qu'anhydride, carboxy ou isocyanate.

Les compositions thermodurcissables telles que définies par la présente invention sont utilisées comme compositions de revêtements et/ou de moulage en tant que telles ou peuvent servir de base pour la préparation de compositions de revêtements et/ou de moulage et de composites par addition possible d'autres additifs et adjuvants ou renforts tels que catalyseurs ou amorceurs de réticulation, pigments, charges minérales, additifs rhéologiques ou de renforts organiques ou minéraux tels que fibres organiques ou fibres ou billes de verre, bien connus et couramment utilisés par l'homme du métier pour de telles applications. Un avantage supplémentaire de la présence des microparticules telles que définies dans les compositions de la présente invention est la possibilité de meilleur contrôle de la rhéologie de ces compositions mêmes à des taux plus élevés de charges et d'additifs dispersés tels que pigments, charges minérales, renforts.

Ainsi les compositions thermodurcissables de l'invention peuvent servir à la préparation de revêtements de protection mécanique et/ou thermique et/ou chimique et plus particulièrement pour la protection de pièces ou appareils électriques ou pièces électroniques nécessitant à la fois une haute tenue mécanique et une stabilité thermique et chimique élevées.

Les exemples suivants peuvent illustrer la présente invention sans aucune limitation du choix des paramètres décrits.

### Exemple 1 : MPR de fonctionnalité époxy

Composition molaire de polymérisables :
Acrylate d'octadécyle : 30% en moles
Acrylate de butyle : 52% en moles
Méthacrylate de glycidyle : 13% en moles
Diacrylate d'hexane diol : 5% en moles

Les microparticules de polymères réticulées (MPR) sont synthétisées par un procédé discontinu de polymérisation radicalaire en dispersion non aqueuse, selon les conditions suivantes :

94 g de n-heptane et 94 g de propanol-2 sont introduits dans un réacteur de 500 ml équipé d'un réfrigérant et d'une agitation mécanique et sous un léger flux d'azote. La température est portée à 70°C. Le mélange de monomères (polymérisables) suivant est chargé dans le réacteur :
Acrylate d'octadécyle : 31,4 g
Acrylate de butyle : 21.5 g
Méthacrylate de glycidyle : 6,0 g
Diacrylate d'hexane diol : 3,7 g

La température est stabilisée à 70°C et 0,52 g d'azobisisobutyronitrile (AIBN) est introduit dans le réacteur, soit 10 mmol/l par rapport aux monomères. La dispersion est de faible viscosité durant toute la durée de synthèse. A la fin des 5 h de réaction, la conversion des monomères est supérieure à 95% d'après le suivi des monomères par chromatographie d'exclusion de taille (SEC) et par la mesure du taux de solides dans la solution. Les MPR sont isolées par distillation des solvants de synthèse. Le réfrigérant est remplacé par une colonne à distiller et la température de la dispersion est progressivement augmentée jusqu'à 105°C. Les MPR sont ensuite séchées sous vide (20 mbars) pour retirer toute trace de solvant résiduel. Les MPR séchées ont l'aspect d'une cire collante à température ambiante. Le rayon de gyration mesurée par diffusion de lumière LASER multi angle (référence DAWN WYATT Technology à λ = 632,8 nm) dans le THF est de l'ordre de 20 à 40 nm.

### Exemple 2 : MPR à double fonctionnalité : époxy et acrylate

Ces MPR sont synthétisées par acrylation partielle des MPR de l'exemple 1. Les groupes époxydes des MPR de l'exemple 1 sont modifiés par réaction avec l'acide acrylique (AA) à 100°C en présence de 0,8% en poids de diisopropyle salicylate de chrome III (CrDIPS) utilisé comme catalyseur et 0,3% en poids d'hydroquinone pour éviter toute polymérisation radicalaire des fonctions acryliques introduites. La modification chimique est réalisée en solution à 50% en poids dans le toluène dans un réacteur de 250 ml équipé d'un réfrigérant et sous un léger flux d'azote.

L'acide acrylique est ajouté progressivement et de manière à obtenir le rapport molaire final [époxy]/[acide] = 1,83. En fin de réaction, les MPR sont obtenues avec une double fonctionnalité [époxy] = 0,44 x 10⁻³ mol.g⁻¹ et [C=C] (acrylate) = 0.25 x 10⁻³ Mol.g⁻¹. Le solvant est évaporé sous vide (20 mbars) à température ambiante.

### Exemple 3 : MPR de fonctionnalité acide (carboxy)

Préparation selon le procédé décrit dans l'exemple 1 à partir de la composition suivante de polymérisables :
Acrylate d'octadécyle : 32.5 g (30% en moles)
Acrylate de butyle : 22.3 g (52% en moles)
Acide acrylique : 4,1 g (13% en moles)
Diacrylate d'hexane diol : 3.8 g (5% en moles)
Aspect des MPR finales obtenues : cire collante à l'ambiante.

### Exemple 4 : MPR de fonctionnalité acide (carboxy)

Préparation selon le procédé de l'exemple 1 à partir de la composition suivante de polymérisables :
Acrylate de lauryle : 26,6 g (30% en moles)
Acrylate d'isobornyle : 7,6 g (10% en moles)
Acrylate de butyle : 19 g (40% en moles)
Acide acrylique : 5.2 g (15% en moles)
Diacrylate d'hexane diol : 4,2 g (5% en moles)
Aspect : liquide visqueux à température ambiante, totalement amorphe.

### Exemple 5 MPR à double fonctionnalité acide (carboxy) et méthacrylate

La préparation est réalisée par méthacrylation partielle des fonctions acide (carboxy) des MPR de l'exemple 4 par le méthacrylate de glycidyle (MAGLY) selon une procédure similaire à l'exemple 2 : réaction en solution, à 50% dans le toluène, à 100°C sous flux d'azote et en présence de CrDIPS comme décrit dans l'exemple 2. La quantité de MAGLY est ajustée pour un rapport molaire initial [époxy]/[acide] = 1.62. A la fin, les MPR portent la double fonctionnalité acide [COOH] = 0,34 x 10⁻³ mol.g⁻¹ et méthacrylate [C=C] = 0,55 x 10⁻³ mol.g⁻¹.

### Exemple 6 : MPR à fonctionnalité acide (carboxyl)

Ces MPR sont préparées selon le procédé décrit dans l'exemple 1 à partir de la composition suivante de polymérisables :
Acrylate de Cardura E10 (le Cardura E10 étant un glycidyle éther aliphatique ramifié commercialisé par la société SHELL) : 23,4 g (20% en moles)
Acrylate de butyle : 27,5 (55% en moles)
Acide acrylique : 7,3 g (20% en moles)
Diacrylate d'hexane diol : 4,4 g (5% en moles)
Aspect : liquide visqueux totalement amorphe à l'ambiante.

### Exemple 7 MPR à double fonctionnalité acide (carboxy) et méthacrylate

La préparation est réalisée comme pour l'exemple 5, par méthacrylation partielle des fonctions acide (carboxy) portées par les MPR de l'exemple 6, par le méthacrylate de glycidyle. Le MAGLY est introduit de sorte que [époxy]/[acide] = 0,33.

### Exemple 8 : MPR non fonctionnalisées

Ces MPR sont préparées suivant le procédé de l'exemple 1 à partir de :
Acrylate d'octadécyle : 30,4 g (30% en moles)
Acrylate de butyle : 20,8 g (65% en moles)
Diacrylate d'hexane diol : 3,5 g (5% en moles)
Aspect des MPR finales : cire collante à l'ambiante.

### Exemple 9 : MPR hydroxylées

Préparation suivant le procédé décrit dans l'exemple 1 à partir de la composition suivante :
Acrylate de Cardura E10 : 22,6 g (20% en moles)
Acrylate de butyle : 26,52 g (55% en moles)
Acrylate de 2-(2-hydroxy) éthyle : 8,35 g (20% en moles)
Diacrylate d'hexane diol : 4,26 g (5% en moles)
Aspect des MPR sechées : liquide visqueux et transparent à l'ambiante.
Autres caractéristiques : rayon de gyration (selon méthode décrite plus haut) de 30 nm et M̅w̅ de 260000 g.mol⁻¹.

### Exemple 10 : MPR de l'exemple 9 modifiées par l'anhydride maléique (AM)

La réaction de modification des MPR de l'exemple 9 par l'AM est conduite dans un réacteur de 250 ml équipé d'un réfrigérant et sous léger flux d'azote, à 75% dans le toluène, à 100°C et pendant 6 heures, en présence de 0.5% en poids d'acétate de sodium comme catalyseur et de 0,1% en poids d'hydroquinone (HQ) afin d'éviter toute polymérisation radicalaire des maléates. La quantité d'AM est ajustée pour avoir un rapport molaire OH/AM=1. En fin de réaction sont obtenues des MPR de double fonctionnalité : maléate/acide (carboxy) de même concentration et égale à 1,23 x 10⁻³ Mol.g⁻¹. Le solvant est éliminé par évaporation sous vide à 20 mbars à l'ambiante.

### Exemple 11 : composition thermodurcissable de moulage époxy/amine (référence comparative)

149,6 g de diglycidyl éther du bisphénol A (DGEBA n = 0.15 sous la référence D.E.R. 340 de DOW Chemical) sont mélangés avec 150,3 g de 4,4'-méthylènebis(3-chloro-2,6-diéthylamine) (MCDEA, sous référence Lonzacure de LONZA) à 135°C pendant 3 min. Le mélange est coulé dans un moule métallique (34x34 cm²) recouvert de tissu téflonné et placé en étuve à 135°C. La réaction de polycondensation se poursuit pendant 14 h suivie d'une post-cuisson pendant 4 h à 190°C. Après retour à température ambiante, la plaque d'épaisseur de 6 mm est démoulée et analysée. Le matériau est caractérisé par un paramètre K_{1c} de 0.6 MPa.m^{0.5} mesuré en flexion trois points suivant la norme ISO 13586 et une température de transition mécanique dynamique T_{α} à 1 Hz de 183°C (associée à la transition vitreuse) mesurée par spectroscopie mécanique dynamique sur un appareil de modèle RDA II de Rheometrics Scientific, avec T_{α} correspondant à la température du maximum de tan δ.

### Exemple 12 : composition de moulage + MPR selon les exemples 1, 2, 8 (selon l'invention)

Les MPR sont ajoutées à 14.3% en poids par rapport au poids total de la composition :
42,9 g de MPR
128,2 g de DGEBA
128,8 g de MCDEA

Les MPR et DGEBA sont tout d'abord mélangés à 135°C puis l'amine est additionnée et la polymérisation se déroule selon les conditions précisées dans l'exemple 11. Les résultats sont présentés dans le tableau comparatif ci-dessous.

**Tableau comparatif des résultats**

| | DGEBA/MCDEA selon ex.11 (comparatif) | MPR non réactives de l' ex.8 (comparatif) | MPR époxy de l'ex. 1 (voir ex. 12) selon invention | MPR époxy et acrylate de l'ex. 2 (voir ex. 12) selon l'invention |
|---|---|---|---|---|
| K_{1c} (MPa.m^{0.5}) | 0.60 | 0.67 | 0,79 | 0,86 |
| T_{α}(°C) | 183 | 165 | 167 | 183 |

Ces résultats démontrent que des résultats significativement meilleurs sont obtenus avec les MPR portant au moins une fonction (époxy) réactive avec la composition thermodurcissable et de préférence au moins deux fonctions distinctes dont l'une (époxy) réactive avec la composition thermodurcissable et l'autre (acrylate) polymérisable par voie radicalaire (thermique).

### Exemple 13 : Composition de moulage DGEBA/MCDEA avec un taux variable de MPR de l'exemple 5 : double fonction acide + méthacrylate

Mêmes conditions de préparation que dans l'exemple 10 sauf avec les MPR de l'exemple 5 à taux variable entre 0 et 22,1 % en poids.

**Résultats**

| | | | | | |
|---|---|---|---|---|---|
| MPR selon ex.5 (% en masse) | 0 | 3,4 | 6,9 | 14,3 | 22,1 |
| K_{1c} (MPa.m^{0.5}) | 0,60 | 1,08 | 0,96 | 1,71 | 1,77 |
| T_{α} (°C) | 183 | 176 | 173 | 170 | 164 |
| G'ᵣ (MPa)* | 11,2 | 7,1 | 6,7 | 6,3 | 5,6 |

| | | | | | |
|---|---|---|---|---|---|
| *G'r est le Module de conservation en cisaillement au plateau caoutchoutique, mesuré en torsion par spectroscopie dynamique à 1 Hz sur RDA II | | | | | |

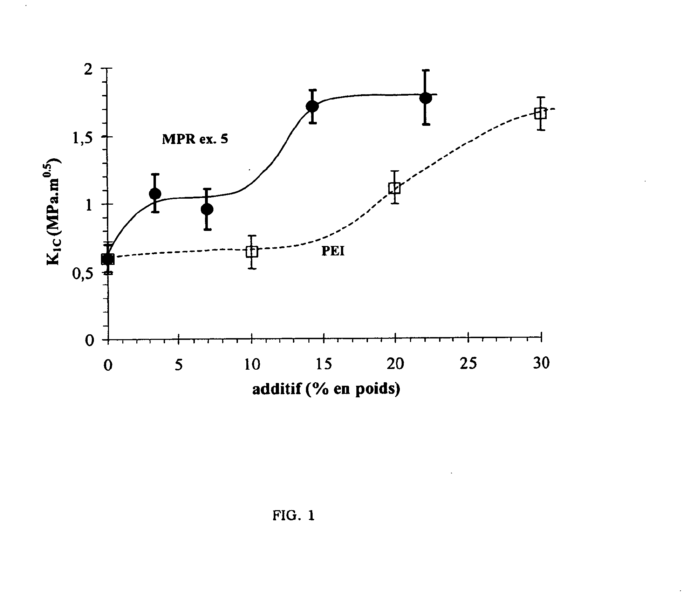

Ces résultats démontrent une amélioration de près de 300% de K_{1c} de la matrice thermodure pour des taux de MPR à partir de 14.3% en poids. La figure 1 compare les résultats de K_{1c} obtenus pour la même matrice, en fonction du taux d'additif d'une part avec les MPR de la présente invention et d'autre part avec un polyétherimide (PEI), les résultats avec le PEI étant cités par A. Bonnet dans son mémoire de thèse à l'INSA de Lyon de 1999. La comparaison démontre, qu'en plus des inconvénients des additifs thermoplastiques déjà cités, il faudrait au moins un taux double d'additif thermoplastique (PEI) pour atteindre des performances K_{1c} équivalentes. En effet, les performances atteintes pour 30% en poids de PEI sont déjà atteintes avec moins de 15% en poids de MPR de l'exemple 5.

### Exemple 14 : Composition de moulage à base de vinyl esters (référence comparative)

195 g d'un diméthacrylate de diglycidyl éther du bisphénol A (commercialisé par Cray Valley sous la référence Craynor CN 151) sont mélangés avec 105 g de styrène à température ambiante. Après obtention d'un mélange homogène de viscosité 0,12 Pa.s à 25°C, la composition est polymérisée par addition et mélange, à la température ambiante, de 1% en poids de peroxyde de méthyléthylcétone PEROXIMON K12 d'ATOCHEM et 2% en poids d'un accélérateur constitué d'un mélange d'octoate de cobalt et de diméthylaniline en proportions en poids égales à 40% en poids en solution dans le styrène. La composition est moulée ensuite dans un moule en verre préalablement graissé. La réaction se poursuit à l'ambiante pendant 14 heures, suivie d'une post-cuisson pendant 1 heure à 120°C. Après refroidissement, la plaque est démoulée et caractérisée avec les caractéristiques obtenues suivantes : K_{1c} = 0,77 MPa.m^{0,5} selon ISO 13586, température de transition Tα par mesure mécanique dynamique à 1 Hz de 142°C, module d'Young de 3,2 GPa mesuré en flexion trois points, résistance au choc Charpy selon ISO 179 égale à 8,86 kJ.m⁻².

### Exemple 15 : composition de moulage à base de vinyl esters et de MPR réactives de l'exemple 10

Les MPR réactives, obtenues selon l'exemple 10, sont ajoutées à un taux de 9,75% en poids par rapport au poids total de la composition :
Composition utilisée :
29,25 g de MPR de l'exemple 10 (fonctions maléate acide)
165, 75 g de CNl51
105 g de styrène

D'abord, les MPR sont mélangées avec le styrène et ensuite sont ajoutés la résine CN 151 (viscosité MPR + CN 151 + styrène : 0,27 Pa.s à 25°C). l'amorceur et catalyseur avec une polymérisation conduite comme pour l'exemple 14. Le matériau final est caractérisé selon les mêmes méthodes que le matériau de l'exemple 14, par :
K_{1c} = 0,98 MPa.m^{0.5}
Température de transition à 1 Hz de 130°C
Module d'Young = 2,7 GPa
Résistance au choc Charpy = 18,82 kJ.m⁻².

Comparés à ceux du matériau sans MPR de l'exemple 14, ces résultats démontrent l'effet significatif de la présence de ces MPR réactives sur l'amélioration de la résistance à la fissuration et aux chocs de la matrice vinyl ester, sans perte significative sur la température de transition vitreuse et le module mécanique ni effet négatif sur l'aptitude de mise en oeuvre.

Il est évident que les mêmes compositions thermodurcissables décrites ci-dessus peuvent servir également pour des applications de revêtements de protection mécanique, thermique ou chimique sur des substrats divers avec les mêmes performances mécaniques et thermiques que celles démontrées pour les applications de moulage.

## Revendications

1. Composition thermodurcissable, comprenant des microparticules de polymère réticulées de taille allant de 10 à 200 nm, **caractérisée en ce que** lesdites microparticules sont au moins partiellement solubles, miscibles et/ou dispersibles dans la composition thermodurcissable de départ et portent au moins une fonction réactive qui peut réagir avec au moins une fonction réactive portée par au moins un des composants réactifs de la composition thermodurcissable et que la composition thermodurcissable est sélectionnée parmi les compositions de type : époxy/amine, époxy/anhydride, isocyanate/amine, isocyanate/alcool, polyesters insaturés, vinyl esters, mélanges polyesters insaturés et vinyl esters, résines hybrides polyesters insaturés/uréthanes, polyuréthanes-urées, résines réactives de Dicyclopentadiène, polyamides réactives.

2. Composition selon la revendication 1 **caractérisée en ce que** les microparticules portent au moins une deuxième fonction réactive distincte de la première, pouvant réagir avec au moins une autre fonction de même type portée par une autre microparticule et/ou par au moins un composant réactif de la composition thermodurcissable.

3. Composition selon l'une des revendications 1 à 2 **caractérisée en ce que** les microparticules portent au moins une fonction réactive par réaction de polycondensation et au moins une deuxième qui est une insaturation α,β éthylénique polymérisable par voie radicalaire ou par réaction spécifique.

4. Composition selon l'une des revendications 1 à 3 **caractérisée en ce que** lesdites microparticules sont obtenues par polymérisation en dispersion en milieu non aqueux non solvant du polymère formé, à partir d'une composition de composés polymérisables éthyléniquement insaturés comprenant :
- au moins un monomère A, comportant une seule insaturation éthylénique polymérisable par voie radicalaire, conférant aux microparticules formées dans ledit milieu non aqueux, une autostabilisation pendant et après polymérisation, sans aucune addition de polymère ayant une fonction d'agent stabilisant, ni avant ni pendant ni après polymérisation
- au moins un composé B comportant au moins deux insaturations éthyléniques polymérisables par voie radicalaire
- au moins un composé C différent de A ou B et comportant au moins une insaturation éthylénique polymérisable par voie radicalaire et au moins une deuxième fonction réactive f1 différente d'une insaturation éthylénique
et en option, au moins un composé D comportant une seule insaturation éthylénique polymérisable par voie radicalaire différent de A.

5. Composition selon la revendication 4 **caractérisée en ce que** les composés A ont une formule générale (I) :
CH₂=CR₁-X-(R₂-Y)ₖ-R (I)
avec
R₁ = H, CH₃
X = ester-(C=O)O-, amide-(C=O) N(R₃)-
Y = ester-O(O=C)-, amide-(R₃)N(C=O)-, uréthane-O(O=C)NH-
R₂ = radical alkylène en C₂-C₆, pouvant être substitué par des groupements fonctionnels tels que OH
R₃ = alkyle en C₁-C₆, H
k = 0 ou 1
R = radical alkyle, alkényle linéaires ou ramifiés en C₈-C₂₂ ou aralkyles substitués sur le cycle aromatique, en C₈-C₂₂ ou radical mono ou polycyclique substitué ou non-substitué en C₆-C₂₂, pouvant comporter une fonction réactive f2 sélectionnée parmi : acide ou anhydride carboxylique, hydroxy, époxy, isocyanate, silane.

6. Composition selon l'une des revendications 1 à 3 **caractérisée en ce que** lesdites microparticules sont obtenues par polymérisation d'une composition de composés polymérisables éthyléniquement insaturés, composée de :
- un premier composant A' représentant de 50 à 99% en moles de ladite composition de polymérisables et constitué de (méth)acrylate de : isobornyle et/ou norbornyle et/ou cyclohexyle et/ou lauryle et/ou tridécyle et/ou octadécyle et/ou de Cardura E10, optionnellement en combinaison avec un alkyl (méth)acrylate en C₂-C₈
- un deuxième composant B' constitué d'au moins un monomère ou oligomère comportant au moins deux insaturations éthyléniques polymérisables par voie radicalaire
- un troisième composant C' constitué d'au moins un monomère ou oligomère comportant en plus d'une insaturation éthylénique polymérisable par voie radicalaire au moins une deuxième fonction réactive f1'différente de l'insaturation éthylénique,
avec la possibilité de modification chimique au moins partielle des fonctions initiales f1' en fonctions finales f2' sous condition que les fonctions f1' sélectionnées ne réagissent pas entre elles lors de la polymérisation, et que la somme de trois composants polymérisables A'+B'+C' soit égale à 100% en moles.

7. Composition selon la revendication 6 **caractérisée en ce que** les microparticules portent des fonctions f1', apportées par le troisième composant C', sélectionnées parmi : époxy, hydroxy, carboxy, anhydride carboxylique, isocyanate, silane, amine, oxazoline et le cas échéant des fonctions fl'au moins partiellement modifiées en fonctions f2' sélectionnées parmi : (méth)acrylates, vinyles, maléates, maléimides, itaconates, esters d'alcools allyliques, insaturations à base de dicyclopentadiène, esters ou amides gras insaturés en C₁₂-C₂₂, sels d'acide carboxylique ou sels d'ammonium quaternaire.

8. Composition selon l'une des revendications 1 à 7 **caractérisée en ce que** le taux de microparticules réticulées réactives est situé de 0,5 à 50% en poids par rapport à la composition thermodurcissable organique globale.

9. Composition selon l'une des revendications 1 à 8 **caractérisée en ce que** la composition thermodurcissable est à base d'époxy/amine et comprend :
a) au moins un composé époxydé ayant une fonctionnalité en groupements époxy d'au moins deux, de structure aromatique et/ou (cyclo)aliphatique
b) au moins un composé amine de fonctionnalité en amine d'au moins deux, de structure aromatique et/ou (cyclo)aliphatique
c) le cas échéant un composé époxyde monofonctionnel portant une deuxième fonction distincte et polymérisable par voie radicalaire
d) 0,5-50% en poids par rapport à a) + b) + c) + d) de microparticules réticulées réactives telles que définies à l'une des revendications 1 à 8

10. Composition selon la revendication 9 **caractérisée en ce que** les microparticules réticulées réactives portent au moins une fonction époxy ou acide ou anhydride carboxylique.

11. Composition selon la revendication 10 **caractérisée en ce que** lesdites microparticules peuvent être obtenues par polymérisation à partir de :
i) 10-50% en moles de (méth)acrylate de : lauryle et/ou tridécyle et/ou d'octadécyle et/ou de docosyle et/ou d'isobornyle et/ou de Cardura E 10
ii) 10-70% en moles de (méth)acrylate de butyle ou de tertiobutyle, d'éthyl-2 hexyle et de 2-(2-éthoxy) éthoxy éthyle
iii) 5-30% en moles de :
- méthacrylate de glycidyle et/ou d'au moins un (méth)acrylate portant au moins une fonction époxyde dérivé de dicyclopentadiène ou de vinyl norbornène ou de cyclohexène et/ou de (méth)acrylates alkoxylés de glycidyle éther, pour obtenir au moins une fonction époxy
- d'acide (méth)acrylique et/ou d'acide maléique ou fumarique ou itaconique et/ou d'anhydride maléique, pour obtenir au moins une fonction acide ou anhydride carboxylique
iv) 2-10% en moles de di(méth)acrylate de : hexane diol et/ou néopentyl glycol et/ou triméthylol propane, avec les proportions de composants étant sélectionnées de manière à ce que la somme des pourcentages molaires de i)+ii)+iii)+iv) soit égale à 100.

12. Composition selon l'une des revendications 10 ou 11 **caractérisée en ce que** lors d'une deuxième étape les fonctions réactives de départ sont modifiées partiellement en une deuxième fonction réactive suivant :
- les fonctions époxy : par réaction avec l'acide (méth)acrylique et/ou l'acide maléique ou fumarique ou itaconique
- les fonctions acides (carboxy) et/ou anhydride : par réaction avec le méthacrylate de glycidyle ou l'alcool vinylique ou allylique ou un (méth)acrylate d'hydroxy alkyle

13. Composition selon l'une des revendications 9 à 12 **caractérisée en ce que** les fonctions réactives des microparticules sont des fonctions : acide et/ou anhydride carboxylique en présence de (méth)acrylate et/ou d'allyle et/ou de vinyle.

14. Composition selon l'une des revendications 1 à 8 **caractérisée en ce que** la composition thermodurcissable comprend :
a) au moins un polyester insaturé et/ou au moins un polyester insaturé modifié par un polyisocyanate et/ou au moins un vinyl ester
b) au moins un comonomère copolymérisable portant au moins une insaturation α,β éthylénique choisi parmi les monomères vinyl aromatiques et/ou (méth)acryliques et/ou allyliques
c) éventuellement au moins un deuxième monomère portant au moins deux fonctions réactives dont une polymérisable par voie radicalaire et l'autre par réaction de condensation
d) 0,5-50% et de préférence de 5 à 25% en poids de microparticules réticulées réactives telles que définies à l'une des revendications 1 à 7

15. Composition selon la revendication 14 **caractérisée en ce que** lesdites microparticules portent au moins une fonction (méth)acrylate ou maléate acide.

16. Composition selon la revendication 15 **caractérisée en ce que** lesdites microparticules peuvent être obtenues par une première étape de polymérisation à partir de :
i) 10-40% en moles de (méth)acrylate de Cardura E10
ii) 10-75% en moles de (méth)acrylate de butyle et/ou de tertiobutyle et/ou d'éthyl-2 hexyle et/ou de 2-(2-éthoxy) éthoxy éthyle et de styrène, avec un rapport molaire styrène sur monomères (méth)acryliques variant de 0 à 0,2
iii) 5-40% en moles de (méth)acrylate d'hydroxyéthyle ou d'anhydride maléique ou d'acide (méth)acrylique ou de méthacrylate de glycidyle
iv) 2-10% en moles de (méth)acrylate de : hexane diol et/ou de propylène glycol et/ou de néopentyl glycol et/ou de triméthylol propane,
avec la somme des pourcentages molaires de tous ces constituants i) + ii) + ii) + iv) étant égale à 100,
suivie d'une deuxième étape de modification chimique au moins partielle des fonctions réactives de départ suivant :
- les fonctions de départ hydroxyles en maléates acides par réaction avec l'anhydride maléique et/ou en (méth)acrylates par réaction avec l'acide (méth)acrylique
- les fonctions de départ époxy en (méth)acrylates, par réaction avec l'acide (méth)acrylique
- les fonctions acide en méthacrylate par réaction avec le méthacrylate de glycidyle
- les fonctions anhydride en (méth)acrylates et acides résiduels par réaction avec un (méth)acrylate d'hydroxyéthyle ou d'hydroxypropyle ou avec le méthacrylate de glycidyle

17. Utilisation des compositions telles que définies à l'une des revendications 1 à 16 dans les revêtements.

18. Utilisation selon la revendication 17 **caractérisée en ce que** lesdits revêtements sont des revêtements de protection de composants, pièces ou appareils électriques ou électroniques.

19. Utilisation des compositions telles que définies à l'une des revendications 1 à 16 pour la fabrication de pièces moulées et de pièces en matériaux composites.

20. Matrices thermodures obtenues à partir des compositions thermodurcissables telles que définies à l'une des revendications 1 à 16.

21. Revêtements de protection, pièces de moulage ou pièces en matériaux composites obtenus à partir des compositions thermodurcissables telles que définies à l'une des revendications 1 à 16.

## Claims

1. Thermosetting composition comprising crosslinked polymer microparticles with a size ranging from 10 to 200 nm, **characterized in that** said microparticles are at least partially soluble, miscible and/or dispersible in the starting thermosetting composition and carry at least one reactive functional group which can react with at least one reactive functional group carried by at least one of the reactive components of the thermosetting composition and **in that** the thermosetting composition is selected from the compositions of type: epoxy/amine, epoxy/anhydride, isocyanate/amine, isocyanate/alcohol, unsaturated polyesters, vinyl esters, unsaturated polyester and vinyl ester blends, unsaturated polyester/urethane hybrid resins, polyurethane-ureas, reactive dicyclopentadiene resins or reactive polyamides.

2. Composition according to Claim 1, **characterized in that** the microparticles carry at least one second reactive functional group distinct from the first which can react with at least one other functional group of the same type carried by another microparticle and/or by at least one reactive component of the thermosetting composition.

3. Composition according to either of Claims 1 and 2, **characterized in that** the microparticles carry at least one functional group which reacts by a polycondensation reaction and at least one second functional group which is an α,β-ethylenic unsaturation which can polymerize by the radical route or by a specific reaction.

4. Composition according to one of Claims 1 to 3, **characterized in that** said microparticles are obtained by polymerization in dispersion in a nonaqueous medium which is not a solvent of the polymer formed, starting from a composition comprising ethylenically unsaturated polymerizable compounds comprising:
- at least one monomer A, comprising a single ethylenic unsaturation which can polymerize by the radical route, conferring, on the microparticles formed in said nonaqueous medium, self-stabilization during and after polymerization, without any addition of polymer having a role of stabilizing agent, either before or during or after polymerization,
- at least one compound B comprising at least two ethylenic unsaturations which can polymerize by the radical route,
- at least one compound C other than A or B and comprising at least one ethylenic unsaturation which can polymerize by the radical route and at least one second reactive functional group f1 other than an ethylenic unsaturation,
and optionally at least one compound D, other than A, comprising a single ethylenic unsaturation which can polymerize by the radical route.

5. Composition according to Claim 4, **characterized in that** the compounds A have a general formula (I):
CH₂=CR₁-X-(R₂-Y)ₖ-R (I)
with
R₁ = H or CH₃,
X = ester -(C=O)O- or amide-(C=O)N(R₃)-,
Y = ester -O(O=C)-, amide-(R₃)N(C=O)- or urethane -O(O=C)NH-,
R₂ = C₂-C₆ alkylene radical, which can be substituted by functional groups, such as OH,
R₃ = C₁-C₆ alkyl or H,
k = 0 or 1,
R = linear or branched C₈-C₂₂ alkyl or alkenyl radical or aralkyl radical substituted on the aromatic ring with a C₈-C₂₂ group or substituted or unsubstituted C₆-C₂₂ mono- or polycyclic radical, which can comprise an f2 reactive functional group selected from: carboxylic acid or anhydride, hydroxyl, epoxy, isocyanate or silane.

6. Composition according to one of Claims 1, to 3, **characterized in that** said microparticles are obtained by polymerization of a composition comprising ethylenically unsaturated polymerizable compounds composed of:
- a first component A' which represents from 50 to 99 mol% of said composition comprising polymerizable compounds and which is composed of isobornyl and/or norbornyl and/or cyclohexyl and/or lauryl and/or tridecyl and/or octadecyl and/or Cardura E10 (meth)acrylate, optionally in combination with a C₂-C₈ alkyl (meth) acrylate,
- a second component B' composed of at least one monomer or oligomer comprising at least two ethylenic unsaturations which can polymerize by the radical route,
- a third component C' composed of at least one monomer or oligomer comprising, in addition to an ethylenic unsaturation which can polymerize by the radical route, at least one second reactive functional group f1' other than the ethylenic unsaturation,
with the possibility of at least partial chemical modification of the f1' starting functional groups to f2' final functional groups, provided that the f1' functional groups selected do not react with one another during the polymerization and provided that the sum of the three polymerizable components A'+B'+C' is equal to 100 mol%.

7. Composition according to Claim 6, **characterized in that** the microparticles carry f1' functional groups, contributed by the third component C', selected from: epoxy, hydroxyl, carboxyl, carboxylic anhydride, isocyanate, silane, amine or oxazoline, and, if appropriate, f1' functional groups at least partially modified to f2' functional groups selected from: (meth)acrylates, vinyls, maleates, maleimides, itaconates, allyl alcohol esters, dicyclo-pentadiene-based unsaturations, unsaturated C₁₂-C₂₂ fatty esters or amides, carboxylic acid salts or quaternary ammonium salts.

8. Composition according to one of Claims 1 to 7, **characterized in that** the level of reactive crosslinked microparticles lies between 0.5 and 50% by weight with respect to the overall organic thermosetting composition.

9. Composition according to one of Claims 1 to 8, **characterized in that** the thermosetting composition is based on epoxy/amine and comprises:
a) at least one epoxide-comprising compound, having a functionality with regard to epoxy groups of at least two, with an aromatic and/or (cyclo)aliphatic structure,
b) at least one amine compound, with an amine functionality of at least two, with an aromatic and/or (cyclo)aliphatic structure,
c) if appropriate, a monofunctional epoxide compound carrying a second distinct functional group which can polymerize by the radical route,
d) 0.5-50% by weight with respect to a) + b) + c) + d) of reactive crosslinked microparticles as defined in one of Claims 1 to 8.

10. Composition according to Claim 9, **characterized in that** the reactive crosslinked microparticles carry at least one epoxy or carboxylic acid or anhydride functional group.

11. Composition according to Claim 10, **characterized in that** said microparticles can be obtained by polymerization starting from:
i) 10-50 mol% of lauryl and/or tridecyl and/or octadecyl and/or docosyl and/or isobornyl and/or Cardura E10 (meth)acrylate,
ii) 10-70 mol% of butyl or tert-butyl, 2-ethylhexyl and 2-(2-ethoxyethoxy)ethyl (meth)acrylate,
iii) 5-30 mol%:
- of glycidyl methacrylate and/or of at least one (meth)acrylate carrying at least one epoxide functional group derived from dicyclopentadiene or from vinylnorbornene or from cyclohexene and/or of alkoxylated glycidyl ether (meth)acrylates, in order to obtain at least one epoxy functional group,
- of (meth)acrylic acid and/or of maleic or fumaric or itaconic acid and/or of maleic anhydride, in order to obtain at least one carboxylic acid or anhydride functional group, ,
iv) 2-10 mol% of hexanediol and/or neopentyl glycol and/or trimethylolpropane di(meth)-acrylate,
with the proportions of the components being selected so that the sum of the molar percentages of i)+ii)+iii)+iv) is equal to 100.

12. Composition according to either of Claims 10 and 11, **characterized in that**, during a second stage, the starting reactive functional groups are partially modified to a second reactive functional group according to:
- the epoxy functional groups: by reaction with (meth)acrylic acid and/or maleic or fumaric or itaconic acid,
- the acid (carboxyl) and/or anhydride functional groups: by reaction with glycidyl methacrylate or vinyl or allyl alcohol or a hydroxyalkyl (meth) acrylate.

13. Composition according to one of Claims 9 to 12, **characterized in that** the reactive functional groups of the microparticles are carboxylic acid and/or anhydride functional groups in the presence of (meth)acrylate and/or allyl and/or vinyl functional groups.

14. Composition according to one of Claims 1 to 8, **characterized in that** the thermosetting composition comprises:
a) at least one unsaturated polyester and/or at least one unsaturated polyester modified by a polyisocyanate and/or at least one vinyl ester,
b) at least one copolymerizable comonomer carrying at least one α,β-ethylenic unsaturation chosen from vinylaromatic and/or (meth)acrylic and/or allyl monomers,
c) optionally at least one second monomer carrying at least two reactive functional groups, one of which can polymerize by the radical route and the other by a condensation reaction,
d) 0.5-50% and preferably from 5 to 25% by weight of reactive crosslinked microparticles as defined in one of Claims 1 to 7.

15. Composition according to Claim 14, **characterized in that** said microparticles carry at least one (meth)acrylate or hydrogen maleate functional group.

16. Composition according to Claim 15, **characterized in that** said microparticles can be obtained by a first polymerization stage starting from:
i) 10-40 mol% of Cardura E10 (meth)acrylate,
ii) 10-75 mol% of butyl and/or tert-butyl and/or 2-ethylhexyl and/or 2-(2-ethoxyethoxy)ethyl (meth)acrylate and of styrene, with a molar ratio of styrene to (meth)acrylic monomers varying from 0 to 0.2,
iii) 5-40 mol% of hydroxyethyl (meth)acrylate or of maleic anhydride or of (meth)acrylic acid or of glycidyl methacrylate,
iv) 2-10 mol% of hexanediol and/or propylene glycol and/or neopentyl glycol and/or trimethylolpropane (meth)acrylate,
with the sum of the molar percentages of all these constituents i)+ii)+iii)+iv) being equal to 100, followed by a second stage of at least partial chemical modification of the starting reactive functional groups according to:
- the starting hydroxyl functional groups to hydrogen maleates by reaction with maleic anhydride and/or to (meth)acrylates by reaction with (meth)acrylic acid,
- the starting epoxy functional groups to (meth)acrylates by reaction with (meth)acrylic acid,
- the acid functional groups to methacrylate by reaction with glycidyl methacrylate,
- the anhydride functional groups to (meth)acrylates and residual acids by reaction with a hydroxyethyl or hydroxypropyl (meth)acrylate or with glycidyl methacrylate.

17. Use of the compositions as defined in one of Claims 1 to 16 in coatings.

18. Use according to Claim 17, **characterized in that** said coatings are protective coatings for electrical or electronic components, items or devices.

19. Use of the compositions as defined in one of Claims 1 to 16 for the manufacture of molded items and of items made of composite materials.

20. Thermoset matrices obtained from the thermosetting compositions as defined in one of Claims 1 to 16.

21. Protective coatings, molded items or items made of composite materials obtained from the thermosetting compositions as defined in one of Claims 1 to 16.

## Patentansprüche

1. Hitzehärtbare Zusammensetzung, enthaltend vernetzte Polymermikroteilchen mit einer Größe von 10 bis 200 nm, **dadurch gekennzeichnet, daß** die Mikroteilchen zumindest teilweise in der hitzehärtbaren Ausgangszusammensetzung löslich, mischbar und/oder dispergierbar sind und mindestens eine reaktive Funktion, die mit mindestens einer reaktiven Funktion mindestens einer der reaktiven Komponenten der hitzehärtbaren Zusammensetzung reagieren kann, tragen und die hitzehärtbare Zusammensetzung unter Zusammensetzungen vom Typ Epoxid/Amin, Epoxid/Anhydrid, Isocyanat/Amin, Isocyanat/Alkohol, ungesättigten Polyestern, Vinylestern, Mischungen von ungesättigten Polyestern und Vinylestern, ungesättigten Polyester/Urethan-Hybridharzen, Polyurethanharnstoffen, reaktiven Dicyclopentadienharzen und reaktiven Polyamiden ausgewählt ist.

2. Zusammensetzung nach Anspruch 1, **dadurch gekennzeichnet, daß** die Mikroteilchen mindestens eine zweite reaktive Funktion, die von der ersten verschieden ist und mit mindestens einer anderen gleichartigen Funktion eines anderen Mikroteilchens und/oder mindestens einer reaktiven Komponente der hitzehärtbaren Zusammensetzung reagieren kann, tragen.

3. Zusammensetzung nach Anspruch 1 oder 2, **dadurch gekennzeichnet, daß** die Mikroteilchen mindestens eine reaktive Funktion, die eine Polykondensationsreaktion eingehen kann, und mindestens eine zweite Funktion, bei der es sich um eine radikalisch oder durch eine spezifische Reaktion polymerisierbare ethylenische α,β-Ungesättigtheit handelt, tragen.

4. Zusammensetzung nach einem der Ansprüche 1 bis 3, **dadurch gekennzeichnet, daß** die Mikroteilchen durch Dispersionspolymerisation in nichtwäßrigem Medium, bei dem es sich um ein Nichtlösungsmittel für das gebildete Polymer handelt, aus einer Zusammensetzung von ethylenisch ungesättigten polymerisierbaren Verbindungen, enthaltend:
- mindestens ein Monomer A mit einer einzigen radikalisch polymerisierbaren ethylenischen Ungesättigtheit, das die in dem nichtwäßrigen Medium gebildeten Mikroteilchen während und nach der Polymerisation selbststabilisierend macht, und zwar ohne Zugabe von Polymer mit Stabilisierungsmittelfunktion vor, während oder nach der Polymerisation,
- mindestens eine Verbindung B mit mindestens zwei radikalisch polymerisierbaren ethylenischen Ungesättigtheiten,
- mindestens eine von A oder B verschiedene Verbindung C mit mindestens einer radikalisch polymerisierbaren ethylenischen Ungesättigtheit und mindestens einer zweiten reaktiven Funktion f1, bei der es sich nicht um eine ethylenische Ungesättigtheit handelt,
und gegebenenfalls mindestens eine Verbindung D mit einer einzigen radikalisch polymerisierbaren ethylenischen Ungesättigtheit, die von A verschieden ist,
erhalten werden.

5. Zusammensetzung nach Anspruch 4, **dadurch gekennzeichnet, daß** die Verbindungen A die allgemeine Formel (I) aufweisen:
CH₂=CR₁-X- (R₂-Y)ₖ-R (I)
mit
R₁ = H, CH₃,
X = Ester -(C=O)O-, Amid -(C=O)N(R₃)-,
Y = Ester -O(O=C)-, Amid -(R₃)N(C=O)-, Urethan -O(O=C)NH-,
R₂ = C₂-C₆-Alkylenrest, der durch funktionelle Gruppen wie OH substituiert sein kann,
R₃ = C₁-C₆-Alkyl, H,
k = 0 oder 1,
R = linearer oder verzweigter C₈-C₂₂-Alkyl- oder Alkenylrest oder gegebenenfalls am aromatischen Ring substituierter C₈-C₂₂-Aralkylrest oder gegebenenfalls substituierter mono- oder polycyclischer C₆-C₂₂-Rest, der eine unter Carbonsäure, Carbonsäureanhydrid, Hydroxy, Epoxy, Isocyanat und Silan ausgewählte reaktive Funktion f2 enthalten kann.

6. Zusammensetzung nach einem der Ansprüche 1 bis 3, **dadurch gekennzeichnet, daß** die Mikroteilchen durch Polymerisation einer Zusammensetzung von ethylenisch ungesättigten polymerisierbaren Verbindungen aus:
- einer ersten Komponente A', die 50 bis 99 Mol-% der Zusammensetzung von polymerisierbaren Verbindungen ausmacht und aus Isobornyl(meth)-acrylat und/oder Norbornyl(meth)acrylat und/oder Cyclohexyl(meth)acrylat und/oder Lauryl(meth)acrylat und/oder Tridecyl(meth)-acrylat und/oder Octadecyl(meth)acrylat und/oder Cardura-E10-(meth)acrylat, gegebenenfalls in Kombination mit einem C₂-C₈-Alkyl-(meth)acrylat, besteht,
- einer zweiten Komponente B' aus mindestens einem Monomer oder Oligomer mit mindestens zwei radikalisch polymerisierbaren ethylenischen Ungesättigtheiten,
- einer dritten Komponente C' aus mindestens einem Monomer oder Oligomer, das neben einer radikalisch polymerisierbaren ethylenischen Ungesättigtheit mindestens eine zweite reaktive Funktion f1', bei der es sich nicht um eine ethylenische Ungesättigtheit handelt, enthält,
wobei die Ausgangsfunktionen f1' zumindest teilweise chemisch zu Endfunktionen f2' modifiziert werden können, mit den Maßgaben, daß die gewählten Funktionen f1' bei der Polymerisation nicht miteinander reagieren und die Summe der drei polymerisierbaren Komponenten A'+B'+C' gleich 100 Mol-% ist,
erhalten werden.

7. Zusammensetzung nach Anspruch 6, **dadurch gekennzeichnet, daß** die Mikroteilchen durch die dritte Komponente C' beigebrachte Funktionen f1', die unter Epoxid, Hydroxy, Carboxy, Carbonsäureanhydrid, Isocyanat, Silan, Amin und Oxazolin ausgewählt sind, und gegebenenfalls zumindest teilweise zu Funktionen f2', die unter (Meth)acrylaten, Vinylen, Maleaten, Maleinimiden, Itaconaten, Allylalkoholestern, Ungesättigtheiten auf Basis von Dicyclopentadien, ungesättigten C₁₂-C₂₂-Fettsäureestern oder -amiden, Carbonsäuresalzen oder quartären Ammoniumsalzen ausgewählt sind, modifizierte Funktionen f1' tragen.

8. Zusammensetzung nach einem der Ansprüche 1 bis 7, **dadurch gekennzeichnet, daß** der Gehalt an reaktiven vernetzten Mikroteilchen 0,5 bis 50 Gew.-%, bezogen auf die gesamte organische hitzehärtbare Zusammensetzung, beträgt.

9. Zusammensetzung nach einem der Ansprüche 1 bis 8, **dadurch gekennzeichnet, daß** die hitzehärtbare Zusammensetzung auf Epoxid/Amin basiert und:
a) mindestens eine Epoxidverbindung mit einer Epoxidgruppenfunktionalität von mindestens zwei mit aromatischer und/oder (cyclo)aliphatischer Struktur,
b) mindestens eine Aminverbindung mit einer Aminfunktionalität von mindestens zwei mit aromatischer und/oder (cyclo)aliphatischer Struktur,
c) gegebenenfalls eine monofunktionelle Epoxidverbindung mit einer zweiten, davon verschiedenen und radikalisch polymerisierbaren Funktion,
d) 0,5-50 Gew.-%, bezogen auf a) + b) + c) + d), reaktive vernetzte Mikroteilchen gemäß einem der Ansprüche 1 bis 8
enthält.

10. Zusammensetzung nach Anspruch 9, **dadurch gekennzeichnet, daß** die reaktiven vernetzten Mikroteilchen mindestens eine Epoxid-, Carbonsäure- oder Carbonsäureanhydridfunktion tragen.

11. Zusammensetzung nach Anspruch 10, **dadurch gekennzeichnet, daß** die Mikroteilchen durch Polymerisation von:
i) 10-50 Mol-% Lauryl(meth)acrylat und/oder Tridecyl(meth)acrylat und/oder Octadecyl-(meth)acrylat und/oder Docosyl(meth)acrylat und/oder Isobornyl(meth)acrylat und/oder Cardura-E10-(meth)acrylat,
ii) 10-70 Mol-% Butyl(meth)acrylat oder tert.-Butyl(meth)acrylat, 2-Ethylhexyl(meth)acrylat und 2-(2-Ethoxy)ethoxyethyl(meth)acrylat,
iii) 5-30 Mol-%:
- Glycidylmethacrylat und/oder mindestens eines (Meth)acrylats mit mindestens einer von Dicyclopentadien oder Vinylnorbornen oder Cyclohexen und/oder alkoxylierten Glycidylether(meth)acrylaten abgeleiteten Epoxidfunktion zum Erhalt mindestens einer Epoxidfunktion,
- (Meth)acrylsäure und/oder Maleinsäure oder Fumarsäure oder Itaconsäure und/oder Maleinsäureanhydrid, zum Erhalt mindestens einer Carbonsäure- oder Carbonsäureanhydridfunktion,
iv) 2-10 Mol-% Hexandioldi(meth)acrylat und/oder Neopentylglykoldi(meth)acrylat und/oder Trimethylolpropandi(meth)acrylat,
wobei die Anteile der Komponenten so gewählt sind, daß die Summe der Molprozentanteile i) + ii) + iii) + iv) gleich 100 ist, erhältlich sind.

12. Zusammensetzung nach Anspruch 10 oder 11, **dadurch gekennzeichnet, daß** die reaktiven Ausgangsfunktionen in einem zweiten Schritt teilweise zu einer zweiten reaktiven Funktion modifiziert werden gemäß:
- Epoxidfunktionen: durch Reaktion mit (Meth)-acrylsäure und/oder Maleinsäure oder Fumarsäure oder Itaconsäure,
- Säurefunktionen (Carboxyfunktionen) und/oder Anhydridfunktionen: durch Reaktion mit Glycidylmethacrylat oder Vinylalkohol oder Allylalkohol oder einem Hydroxyalkyl(meth)-acrylat.

13. Zusammensetzung nach einem der Ansprüche 9 bis 12, **dadurch gekennzeichnet, daß** es sich bei den reaktiven Funktionen der Mikroteilchen um Carbonsäure- und/oder Carbonsäureanhydridfunktionen in Gegenwart von (Meth)acrylat- und/oder Allyl- und/oder Vinylfunktionen handelt.

14. Zusammensetzung nach einem der Ansprüche 1 bis 8, **dadurch gekennzeichnet, daß** die hitzehärtbare Zusammensetzung:
a) mindestens einen ungesättigten Polyester und/oder mindestens einen durch ein Polyisocyanat modifizierten ungesättigten Polyester und/oder mindestens einen Vinylester,
b) mindestens ein copolymerisierbares Comonomer mit mindestens einer α,β-ethylenischen Ungesättigtheit, ausgewählt unter aromatischen Vinylmonomeren und/oder (Meth)acrylmonomeren und/oder Allylmonomeren,
c) gegebenenfalls mindestens ein zweites Monomer mit mindestens zwei reaktiven Funktionen, von denen eine radikalisch und die andere durch eine Kondensationsreaktion polymerisierbar ist,
d) 0,5-50 Gew.-% und vorzugsweise 5 bis 25 Gew.-% reaktive vernetzte Mikroteilchen gemäß einem der Ansprüche 1 bis 7
enthält.

15. Zusammensetzung nach Anspruch 14, **dadurch gekennzeichnet, daß** die Mikroteilchen mindestens eine (Meth)acrylat- oder saure Maleatfunktion tragen.

16. Zusammensetzung nach Anspruch 15, **dadurch gekennzeichnet, daß** die Mikroteilchen durch einen ersten Schritt der Polymerisation von
i) 10-40 Mol-% Cardura-E10-(meth)acrylat,
ii) 10-75 Mol-% Butyl(meth)acrylat und/oder tert.-Butyl(meth)acrylat und/oder 2-Ethylhexyl(meth)acrylat und/oder 2-(2-Ethoxy)-ethoxyethyl(meth)acrylat und Styrol, wobei das Molverhältnis von Styrol zu (Meth)acrylmonomeren von 0 bis 0,2 variiert,
iii) 5-40 Mol-% Hydroxyethyl(meth)acrylat oder Maleinsäureanhydrid oder (Meth)acrylsäure oder Glycidylmethacrylat,
iv) 2 bis 10 Mol-% Hexandiol(meth)acrylat und/oder Propylenglykol(meth)acrylat und/oder Neopentylglykol(meth)acrylat und/oder Trimethylolpropan(meth)acrylat,
wobei die Summe der Molprozentanteile aller dieser Bestandteile i) + ii) + iii) + iv) gleich 100 ist, gefolgt von einem zweiten Schritt der zumindest teilweisen chemischen Modifizierung der reaktiven Ausgangsfunktionen gemäß:
- Hydroxylausgangsfunktionen zu sauren Maleaten durch Reaktion mit Maleinsäureanhydrid und/oder zu (Meth)acrylaten durch Reaktion mit (Meth)-acrylsäure,
- Epoxidausgangsfunktionen zu (Meth)acrylaten durch Reaktion mit (Meth)acrylsäure,
- Säurefunktionen zu Methacrylat durch Reaktion mit Glycidylmethacrylat,
- Anhydridfunktionen zu (Meth)acrylaten und verbleibenden Säuren durch Reaktion mit einem Hydroxyethyl- oder Hydroxypropyl(meth)acrylat oder mit Glycidylmethacrylat
erhältlich sind.

17. Verwendung von Zusammensetzungen gemäß einem der Ansprüche 1 bis 16 als Beschichtungen.

18. Verwendung nach Anspruch 17, **dadurch gekennzeichnet, daß** es sich bei den Beschichtungen um Schutzbeschichtungen für elektrische oder elektronische Bauteile, Teile oder Vorrichtungen handelt.

19. Verwendung von Zusammensetzungen gemäß einem der Ansprüche 1 bis 16 zur Herstellung von Formteilen und Verbundwerkstoffteilen.

20. Duroplastische Matrices, erhalten aus den hitzehärtbaren Zusammensetzungen gemäß einem der Ansprüche 1 bis 16.

21. Schutzbeschichtungen, Formteile oder Verbundwerkstoffteile, erhalten aus den hitzehärtbaren Zusammensetzungen gemäß einem der Ansprüche 1 bis 16.
